# EUROPÄISCHE PATENTANMELDUNG

(11) **EP 2 208 711 A1**
(43) Veröffentlichungstag der Anmeldung: **21.07.2010**
(21) Anmeldenummer: 09000252.8
(22) Anmeldetag: 09.01.2009
(51) Int. Cl.: C02F 3/22, C02F 3/12

(54) **Klärtechnische Anlage**

(71) Anmelder: Kessel GmbH, 85101 Lenting (DE)
(72) Erfinder: Die Erfindernennung liegt noch nicht vor
(74) Vertreter: Grünecker, Kinkeldey, Stockmair & Schwanhäusser Anwaltssozietät

(57) **Zusammenfassung**

In einer klärtechnischen Anlage, insbesondere einer Abwasser-Kleinkläranlage (K) mit einem Kammern aufweisenden Behälter (1), in welchem wenigstens ein Druckluftheber (8) angeordnet ist, einer Druckluftquelle (L) außerhalb des Behälters, einem an die Druckluftquelle (L) angeschlossenen Verteiler (V) mit wenigstens einem Magnetventil (M), wenigstens einer Druckluftleitung (19) vom Verteiler zum jeweiligen Druckluftheber (8), und einer zumindest mit dem Verteiler (V) elektrisch verbundenen Klärsteuerung (C), sind der Verteiler (V) und gegebenenfalls die jeweilige Druckluftleitung (19) zum Druckluftheber (8) im Inneren des Behälters (1) installiert.

## Beschreibung

Die Erfindung betrifft eine klärtechnische Anlage gemäß Oberbegriff des Patentanspruchs 1.

Allgemein werden im Hinblick auf z.B. durch EU-Vorschriften diktierte Umweltauflagen vermehrt klärtechnische Anlagen, insbesondere sogenannte Kleinkläranlagen, benötigt, die dezentral Abwässer, einschließlich fäkalienhaltiger Abwässer, einzelner alleinstehender Häuser oder kleinerer bis mittlerer Betriebe oder landwirtschaftlicher Betriebe behandeln, die gegebenenfalls nicht an eine zentrale Abwasserentsorgung angeschlossen sind. Da solche klärtechnischen Anlagen im Regelfall nicht professionell überwachbar sind, müssen sie weitgehend automatisch und vor allem zuverlässig und kostengünstig betreibbar sein. Solche Kleinkläranlagen können Abwässer für bis zu etwa 50 Einwohnern verarbeiten, beispielsweise etwa 8 m³ pro Tag, und werden am Einbauort meist von Fachpersonal betriebsfertig installiert. Zum Transferieren von Abwässern und/oder Schlammbestandteilen zwischen den Kammern des Behälters werden häufig sogenannte Druckluftheber verwendet, weil diese sehr funktionssicher sind, keine elektrischen Anschlüsse sondern nur Druckluft benötigen, und verschiedenste Abwässer pumpen können. Zumindest die Druckluftquelle, meist ein Kompressor, und gegebenenfalls auch die Klärsteuerung, befinden sich im Regelfall außerhalb des Behälters.

Eine solche klärtechnische Anlage wird z.B. so betrieben, dass relativ lange, unterschiedliche Betriebsphasen einander abwechseln, so dass eine auf einer Fehlinstallation beruhende Funktionsstörung lange Zeit überhaupt nicht festgestellt wird und dann umso schwerer zu beheben ist. In einer Betriebsphase wird Abwasser in einer Kammer gesammelt und beruhigt, wobei sich in einem Schlammfang Schlamm abzusondem beginnt. In wenigstens einer weiteren Kammer, die Belebtschlamm, gegebenenfalls eine Schwimmschlammschicht, und zu klärendes Abwasser enthält, kann währenddessen durch Einblasen von Druckluft mittels natürlicher Bakterien ein Klärvorgang ablaufen. Bedarfsabhängig wird dann aus dem geklärten Abwasser Reinwasser mittels eines Drucklufthebers abgezogen und abgelassen, das gegebenenfalls im Erdreich versickert. Aus der Beruhigungskammer wird mit einem anderen Druckluftheber phasenweise Abwasser in den Klärprozess überführt. Erreicht der Belebtschlamm ein bestimmtes Niveau, wird dieser z.B. bis auf einen funktionsnotwendigen Restbestand mittels eines weiteren Drucklufthebers in den Schlammfang der Beruhigungskammer überführt. Der Schlammfang wird bei einer vorbestimmten Schlammhöhe z.B. über ein Saugfahrzeug geleert.

Bei der aus DE 10 2006 024 717 A1 bekannten Kleinkläranlage sind die Druckluftquelle, die Klärsteuerung und ein Verteiler mit Magnetventilen außerhalb des Behälters angeordnet, wobei der Verteiler pneumatisch an die Druckluftquelle und elektrisch an die Klärsteuerung angeschlossen ist. Vom Verteiler führt zu jedem Druckluftheber im Behälter eine Druckluftleitung. Ferner sind Sensoren wie Schwimmerschalter im Behälter installiert, die elektrisch mit der Klärsteuerung verbunden werden. Obwohl es Bestrebungen gibt, die Druckluftheber zu einfach installierbaren Baugruppen zusammenzufassen, ist es dennoch erforderlich, die Druckluftleitungen vom Verteiler zu jedem Druckluftheber bei der Installation der Anlage vor Ort und die elektrischen Verkabelungen zwischen der Klärsteuerung und den elektrischen Sensoren ordnungsgemäß auch im Inneren des Behälters anzuschließen, um Betriebsstörungen und Fehlfunktionen zu vermeiden. Darauf hat jedoch der Hersteller der klärtechnischen Anlage keinen Einfluss mehr, da, wie erwähnt, die Installation vor Ort durch Fachpersonal ausgeführt wird und die Qualität der Installationsarbeiten ausschließlich von der Sorgfalt und vom Können des Fachpersonals abhängt. In der Praxis kommt es immer wieder zu solchen Fehlern, wobei Betriebsstörungen der klärtechnischen Anlage zu erheblichen Umweltbelastungen und Schäden im System führen. Die Behebung fehlerhafter Installationen ist bei gefülltem Behälter außerordentlich mühsam, zeitaufwändig und unangenehm, und wird vor allem meist vom Hersteller oder Fachleuten des Herstellers auf Kulanzbasis verlangt, der für diese Fehler nicht direkt verantwortlich ist.

Das Grundprinzip eines Drucklufthebers (auch Mammutpumpe oder Mammutheber genannt) ist gut in DE-U-1465110 (Hilfsgebrauchsmuster aus 1939) offenbart. Der Druckluftheber dient zum Abpumpen von verschmutztem Wasser aus einem Brunnenschacht durch Einblasen von Druckluft an einer tiefliegenden Stelle eines von oben eingetauchten Steigrohrs, von dem oberhalb der Wasseroberfläche ein Auslauf abzweigt. Die Druckluft-Einblasleitung ist von oben abgedichtet in das Steigrohr eingeführt, so dass durch die eingeblasene Druckluft zu hebendes Wasser mit darin enthaltenen Verunreinigungen im Zwischenraum zwischen der Einblasleitung und dem Steigrohr hochsteigt und über den Auslauf entfernt wird.

Aus DE-A1-10 2005 057 723 ist ein Verteiler für eine Kleinkläranlage bekannt, der ein aus Spritzgussteilen zusammengesetztes Außengehäuse mit mehreren Magnetventilen und elektrische Anschlussleitungen zu den Magnetventilen aufweist. Der Verteiler ist nur spritzwassergeschützt und nicht überflutbar, weil ausreichende innere Abdichtungen fehlen, so dass bei einer gravierenden Betriebsstörung Abwässer über die Druckluftleitungen und nicht mehr ordnungsgemäß schließende Ventile oder offene Ventile bis zu den Magneten und/oder den elektrischen Anschlüssen vordringen könnten.

Aus DE-U1-20 2005 003 588 ist eine Kleinkläranlage bekannt, bei der mehrere Druckluftheber in eine vormontierbare Baueinheit zusammengefasst sind, die bequem im Behälter installierbar ist. Die Baueinheit weist oberseitig freiliegende Anschlüsse für Druckluftschläuche auf, die dort bei eingebauter Baueinheit im Inneren des Behälters oder mühsam von oben durch ein Mannloch zu dem außerhalb des Behälters platzierten Verteiler anzuschließen sind. Trotz farbiger Markierungen oder Beschriftungen der Schlauchanschlüsse an der Baueinheit kommt es in der Praxis zu Verwechslungen, aus denen erst später feststellbare Betriebsstörungen oder Fehlfunktionen der Kleinkläranlage resultieren. Denn das Anschließen der Druckluftleitungen gestaltet sich wegen schlechter Sichtverhältnisse und beengten Zugriffs umständlich und mühsam, was unter anderem ein Grund für Verwechslungen ist. Die mehreren bis zum außerhalb des Behälters angeordneten Verteiler zu verlegenden Druckluftleitungen sind oftmals relativ lang und bedeuten einen beträchtlichen Kostenmehraufwand.

Der Erfindung liegt die Aufgabe zugrunde, eine klärtechnische Anlage, insbesondere eine Kleinkläranlage der eingangsgenannten Art anzugeben, bei der Installationsfehler weitestgehend ausgeschlossen sind, und/oder es dem Hersteller der klärtechnischen Anlage möglich ist, gezielt auf die ordnungsgemäße Installation Einfluss zu nehmen.

Die gestellte Aufgabe wird mit dem Merkmalen des Patentanspruchs 1 gelöst.

Da der Verteiler wie zweckmäßig auch die Druckluftleitungen zu den Drucklufthebern im Inneren des Behälters installiert sind, lässt sich dieser Teil der klärtechnischen Anlage bequem und fehlerfrei vorinstallieren, beispielsweise bereits beim Hersteller der klärtechnischen Anlage. Der Verteiler ist dauerhaft wasserdicht und sogar überflutbar. Deshalb bedeutet seine Unterbringung im Inneren des Behälters keine Erhöhung der Betriebsgefahr, da selbst bei einem totalen Systemausfall mit Überfüllung des Behälters weder in den Verteiler zurückgedrücktes Abwasser die Magnetspulen noch die elektrischen Anschlüsse erreichen kann, und auch von außen Dichtheit herrscht. Die vor Ort auszuführenden Installationsarbeiten können sich darauf beschränken, nur noch die Druckluftspeiseleitung an den Verteiler anzuschließen und/oder die Steuerleitung von der Klärsteuerung, wobei jedoch mangels Alternativen Fehlanschlüsse ausgeschlossen sind. Der Kostenaufwand der trotz nennenswerten Abstands zur Druckluftquelle nur kurzen Druckluftleitungen bzw. -schläuche im Behälterinneren ist gering.

Bei einer zweckmäßigen Ausführungsform ist zwischen dem Verteiler und der Druckluftquelle sowie der Klärsteuerung jeweils eine in den Behälter geführte Druckluft-Speise- und eine Steuerleitung vorgesehen. Diese beiden Leitungen sind nicht nur in ihrem Erscheinungsbild unverwechselbar, sondern auch bezüglich der Anschlussart, so dass hier Fehlinstallationen ausgeschlossen sind.

Bei einer zweckmäßigen Ausführungsform sind in dem einen Zugang aufweisenden Behälter mehrere Druckluftheber angeordnet, und über mehrere Druckluftleitungen an den Verteiler angeschlossen, wobei der Verteiler im Bereich des Zugangs, z.B. oberhalb des BetriebsFüllstandniveaus der klärtechnischen Anlage, herausnehmbar installiert ist. Zur Installation ist, vorzugsweise, eine ohne Werkzeug ausschließlich manuell bedienbare Halterung vorgesehen, so dass ein rascher und bequemer Austausch oder eine Entnahme des Verteilers jederzeit möglich ist. Zu diesem Zweck haben die Druckluftleitungen, die an den Verteiler angeschlossen sind, entsprechende Überlängen, um, falls erforderlich, die Druckluftleitungen, und gegebenenfalls auch die elektrischen Leitungen, entweder überhaupt nicht lösen zu müssen, oder bequem erst außerhalb des Behälters lösen zu können.

Bei einer besonders wichtigen Ausführungsform weist die Halterung einen Einhand-Bedienungshebel zum Festlegen des Verteilers auf. So kann bequem, und gegebenenfalls ohne in den Behälter einsteigen zu müssen, von oben mit einer Hand der Verteiler gelöst und herausgehoben werden, während sich die Bedienungsperson mit der anderen Hand abstützt. Dazu ist der Einhand-Bedienungshebel zweckmäßig so ausgebildet und angeordnet, dass er auch das bequeme Ausheben und Wiedereinsetzen des Verteilers ohne andere Hilfsmittel ermöglicht. Beispielsweise lässt sich der Bedienungshebel mit einem gewissen Bewegungswiderstand schwenken, der ausreicht, ein selbsttätiges Kippen des gelösten und nur am Bedienungshebel gehaltenen Verteilers zu verhindern.

Bei einer zweckmäßigen Ausführungsform ist wenigstens ein elektrisch an die Klärsteuerung angeschlossener Füllstands- oder Schwimmerschalter-Sensor im Behälter installiert, dessen elektrische Verbindung zur Klärsteuerung durch den Verteiler geführt ist, vorzugsweise sogar im Verteiler in die Steuerleitung zur Klärsteuerung integriert ist.

Der Verteiler kann außenseitig wenigstens eine mechanische Aufnahme zur Montage eines Sensorkabels aufweisen, das von der Komponente in den Verteiler oder einem Stecker am Verteiler führt, und bei der Vorabinstallation einfach am Verteiler festgeklemmt wird.

Günstig weist der Verteiler ein Außengehäuse aus Kunststoff-Spritzgussteilen auf, und sind im Außengehäuse jeweils hermetische Abdichtungen zwischen einem Druckluftbereich und einem Aktorenbereich und dem Aktorenbereich und der Außenseite vorgesehen. Die Spritzgusstechnik ermöglicht hohe Maßgenauigkeiten und große Formvielfalt für das Außengehäuse. Die hermetischen Abdichtungen im Inneren und von innen nach außen stellen sicher, dass selbst bei einer Betriebsstörung mit Überflutung des Verteilers keine Funktionssteuerungen im z.B. elektrische und/oder magnetische Komponenten enthaltenden Aktorenbereich auftreten.

Zweckmäßig ist der Druckluftbereich in einem Gehäuseunterteil angeordnet, der einen Drucklufteinlass, einen Verteilerkanal, Stichkanäle jeweils vom Verteilerkanal zu Ventilsitzkammern, integrierte Ventilsitze, und in Verlängerung der Ventilsitze Anschlussstutzen für die Druckluftleitungen aufweist. Der Drucklufteinlass kann seitlich angeordnet sein, während die Anschlussstutzen an der Unterseite gruppiert sind. Die Druckluftleitungen sind zweckmäßig flexible und gut verlegbare Druckluftschläuche. Dieser speziell als Spritzguss-Formteil ausgebildete Gehäuseunterteil enthält somit nahezu alle Funktionskomponenten für die vom Verteiler zu erwartenden Funktionen, und entsprechende Montiervorrichtungen für die Magneten oder die mit den Magneten ausgestatteten Teile der Magnetventile.

Ferner ist im Gehäuseunterteil zumindest eine abgedichtete Kabeldurchführung mit einer Schraubverbindung vorgesehen. Diese wenigstens eine Kabeldurchführung dient entweder zum Vorinstallieren der Steuerleitung von der Klärsteuerung und/oder einer elektrischen Leitung einer anderen, in der Anlage installierten Komponente, wie einem Schwimmerschalter, wobei, falls mehrere Kabeldurchführungen vorgesehen sind, jeweils für eine elektrische Leitung oder ein Kabel eine eigene Kabeldurchführung nutzbar ist. Alternativ könnte hier jeweils ein Steckerteil montiert sein, in den sich ein passender Stecker der Leitung oder des Kabels einstecken lässt.

Im Druckluftleinlass des Verteilerkanals des Gehäuseunterteils kann ein Flanschteil eines Druckluft-Schlauchverbinders angeordnet sein. Dieser Flanschteil wird zweckmäßig abgedichtet verschraubt, so dass bei Bedarf Zugang zum Verteilerkanal möglich ist.

Der Aktorenbereich kann hingegen in einem Gehäuseoberteil angeordnet sein, der unter Zwischenlage eines Dichtungselements mit einem Umfangsflansch des Gehäuseunterteils verbunden ist. Als Verbindung bietet sich hier Verschrauben an, um den aus dem Behälter entnommenen Verteiler bei Bedarf bequem zerlegen zu können. An dem Gehäuseoberteil kann eine im Wesentlichen ebene Montierseite geformt sein, über die, vorzugsweise, der Druckluft-Schlauchverbinder vorsteht. Die Montierseite kann zum Installieren des Verteilers im Behälter genutzt werden, beispielsweise an einem entsprechend geformten und platzierten Montierwiderlager im Behälter, z.B. im Bereich eines Behälterdoms.

Zur bequemen Installation des Verteilers im Behälter ist am Gehäuseoberteil an der Montierseite eine unten liegende Steckschürze eingeformt, und ist der U-förmig ausgebildete Einhand-Bedienungshebel in Schwenklagerungen außen am Gehäuseoberteil schwenkbar gelagert. Der Bedienungshebel kann über Exzenter mit Zugankern gekoppelt sein, die oberhalb der Steckschürze über die Montierfläche vorstehen. Somit ist auch ein Teil der Halterung zum Installieren des Verteilers bereits an diesem vorgesehen.

Zweckmäßig ist im Behälter für den Verteiler ein Montierwiderlager vorgesehen, das eine um einen Durchbruch für den Druckluft-Schlauchverbinder angeordnete Stecktasche für die Steckschürze und Eingriffsöffnungen für die Zuganker aufweist. Der Verteiler lässt sich bei gelöstem Bedienungshebel mit diesem mit der Steckschürze in die Stecktasche einführen, wobei die Zuganker in entsprechende Öffnungen eingebracht werden, und nur durch nachfolgendes Verschwenken des Bedienungshebels der Verteiler fest installiert ist. Zum Herausnehmen des Verteilers wird umgekehrt vorgegangen, wobei nach dem Hochschwenken des Bedienungshebels zuerst die Zuganker gelöst und dann in der gleichen Bewegung auch die Steckschürze aus der Stecktasche herausgezogen werden. Das Montierwiderlager im Behälter kann ein annähernd quadratischer Flansch mit einem nach außen geführten Schutzrohrstutzen zumindest für die Druckluft-Speiseleitung und den Druckluft-Schlauchverbinder sein. Der Flansch kann an passender Stelle im Behälter eingeformt oder montiert sein, und weist die Stecktasche sowie entsprechende Widerlager für die Zuganker auf.

Die Aufnahme zur Montage eines Kabels am Verteiler kann eine an die Montierfläche angrenzende, oberhalb der Steckschürze und unterhalb der Zuganker positionierte, seitlich offene Tasche im Gehäuseoberteil sein. Wenn beispielsweise ein Schwimmerschalter montiert ist, braucht dessen Kabel nur in die Tasche eingeklinkt zu werden, das dann zur Kabeldurchführung oder einem Steckerteil im Gehäuseunterteil verläuft. Die gesamte Unterbaugruppe aus dem Verteiler, Schwimmerschaltern, den elektrischen Leitungen und den Druckluftleitungen kann im Behälter vormontiert und/oder vorinstalliert werden. Auch die von der Klärsteuerung kommende elektrische Leitung könnte direkt mit einem Stecker an einen Steckerteil am Gehäuse des Verteilers angesteckt werden.

Bei einer zweckmäßigen Ausführungsform sind im Behälter an den Verteiler angeschlossene Steuerleitungs- und Druckluft-Speise-Leitungsabschnitte installiert, die außerhalb des Behälters Schnellverbinder oder Steckkupplungen aufweisen, mit denen die Steuerleitung und die Druckluft-Speiseleitung anschließbar sind. Auch diese Leitungsabschnitte können zusammen mit dem Verteiler vorinstalliert werden, so dass vor Betriebsaufnahme überhaupt nicht mehr ins Innere des Behälters eingestiegen zu werden braucht, sondern nur noch die Steuerleitung und die Druckluft-Speiseleitung außen angeschlossen bzw. angesteckt zu werden brauchen.

Ausführungsformen des Erfindungsgegenstandes werden anhand der Zeichnungen erläutert. Es zeigen:
- Fig. 1: eine schematische Schnittdarstellung einer klärtechnischen Anlage, hier in Form einer Kleinkläranlage,
- Fig. 2: eine Perspektivansicht eines zur Installation vorbereiteten Verteilers der klärtechnischen Anlage von Fig. 1
- Fig. 3: eine Ansicht der Unterseite des Verteilers von Fig. 2,
- Fig. 4: einen Schnitt in der Schnittebene IV-IV in Fig. 3,
- Fig. 5: eine perspektivische Schnittansicht des Verteilers, und
- Fig. 6: eine Perspektivansicht eines installierten Verteilers.

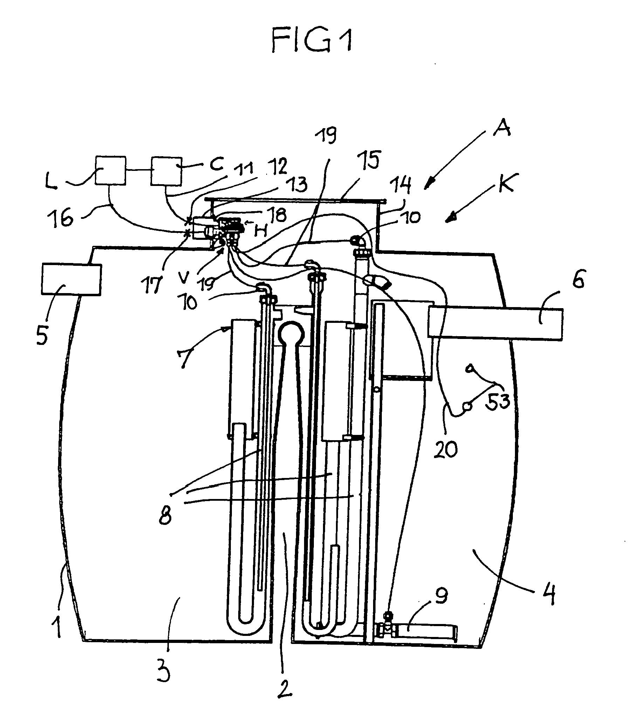

Eine klärtechnische Anlage A in Fig. 1 ist z.B. eine sogenannte Kleinkläranlage K und umfasst einen Behälter 1, beispielsweise einen einstückigen rotationsgeformten Kunststoffbehälter, mit einer Trennwand 2, die Kammern 3 und 4 voneinander trennt. Zur Kammer 3 führt ein Abwasser-Zulauf 5. Aus der Kammer 4 ist ein Reinwasserablauf 6 herausgeführt. An der Trennwand 2 ist eine Baueinheit 7 installiert, die mehrere Druckluftheber 8, in gezeigtem Ausführungsbeispiel drei Druckluftheber 8, zusammenfasst, die zur Steuerung der Klär-Prozessphasen dienen. An der Baueinheit 7 kann eine tiefliegende eine Belüftungsvorrichtung 9 angeordnet sein, z.B. eine Belüfterkerze oder ein Belüfterteller. An der Baueinheit 7, deren Hauptzweck eine Montageerleichterung und eine Strömungsleitfunktion für die Druckluftheber 8 ist, kann auch ein Probe-Entnahmebehälter mit Überlauf vorgesehen sein. Die Druckluftheber 8 weisen oben platzierte Anschlüsse 10 für Druckluftleitungen 19 (z. B. flexible Schläuche) auf, die zu Anschlussstutzen eines im Inneren des Behälters 1, vorzugsweise herausnehmbar, mit einer Halterung H installierten Verteilers V führen, und dort an diesen angeschlossen sind. Außerhalb des Behälters 1 ist an geeigneter Stelle eine Klärsteuerung C angeordnet, die funktionell mit einer Druckluftquelle L, beispielsweise einem Kompressor verbunden sein kann. Von der Klärsteuerung C führt eine elektrische Leitung 11 in einem, z.B. nach außen ragenden, Lehrrohr 13 zu einem Montierwiderlager 18 im Behälter 1, und dort zu dem Verteiler V. Von der Druckluftquelle L führt eine Druckluft-Speiseleitung 16 ebenfalls durch das Leerrohr 13 zum Verteiler V. Gegebenenfalls sind in den Leitungen 11, 16 Schnellverbinder oder Steckkupplungen 12, 17 enthalten.

An geeigneter Stelle im Inneren des Behälters 1 ist wenigstens ein Füllstands- oder Schwimmerschalter-Sensor 53 platziert, der über eine elektrische Leitung 20 mit der Klärsteuerung C verbunden ist, wobei die elektrische Leitung 20, vorzugsweise, in den Verteiler V geführt ist, und sich dann von dort beispielsweise in Form einer oder mehrerer Adern der elektrischen Leitung 11 weiter zur Klärsteuerung C erstreckt. Im Behälter 1 ist oberseitig ein Zugang 14, z.B. ein Dom oder Mannloch, vorgesehen, der durch einen Deckel 15 verschlossen sein kann. Der Verteiler V ist mittels einer Halterung 4 im Bereich des Zugangs 14, 15 am Montierwiderlager 18 installiert, zweckmäßig in einer Höhenlage oberhalb des Betriebsfüllstandniveaus der klärtechnischen Anlage A.

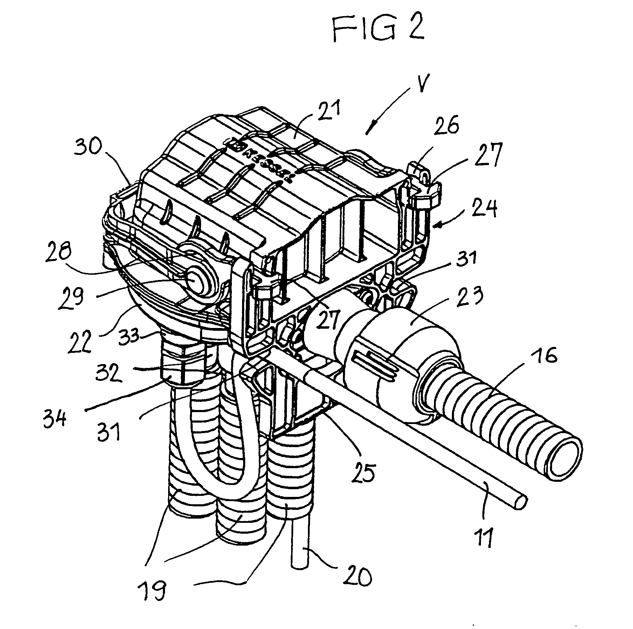

Anhand der Fig. 2-6 wird der beispielsweise bereits beim Hersteller, gegebenenfalls schon im Behälter 1, vorinstallierte Verteiler V erläutert.

Die Perspektivansicht des Verteilers V in Fig. 2 zeigt ein beispielsweise aus Kunststoff-Spritzgussteilen erstelltes Außengehäuse mit einem Gehäuseoberteil 21 und einem Gehäuseunterteil 22, die miteinander über ein Dichtelement 37, z.B. einem O-Ring, hermetisch dicht verbunden, beispielsweise verschraubt oder verschweißt, sind. An einer im Wesentlichen ebenen, in Betriebslage z.B. in etwa vertikalen Montierseite 24 des Gehäuseoberteils 21 ragt ein Druckluft-Schlauchverbinder 23 vor, an den die Druckluft-Speiseleitung 16 angeschlossen ist. Unten ist an der Montierseite 24 eine Einsteckschürze 25 angeformt, während oben Schlitze 26 zum Durchgriff von hier beispielsweise zwei Zugankern 27 geformt sind, die Teil der Halterung H zur Installation des Verteilers im Behälter 1 sind.

Jeder Zuganker 27 besitzt z.B. einen hammerförmigen Kopf und sitzt drehbar auf einem Exzenter 28 einer Schwenklagerung 29 eines Bedienungshebels 30, wobei die beiden Schwenklagerungen 29 an den Außenseiten des Gehäuseoberteils 21 angeordnet sind. Der Bedienungshebel 30 ist U-förmig und ermöglicht eine Einhand-Bedienung der Halterung H ohne irgendwelche Hilfswerkzeuge, um den Verteiler V in dem Montierwiderlager 18 des Behälters 1 (Fig. 1) zu installieren oder davon abzunehmen.

In der gezeigten Position des Bedienungshebels 30 befinden sich die Zuganker 27 am nächsten zu den Schwenklagerungen 29. Wird der Bedienungshebel 30 in Fig. 2 im Uhrzeigersinn nach oben geschwenkt, dann bewegen sich die Zuganker 27 weiter über die Montierfläche 24 hinaus (Lösestellung).

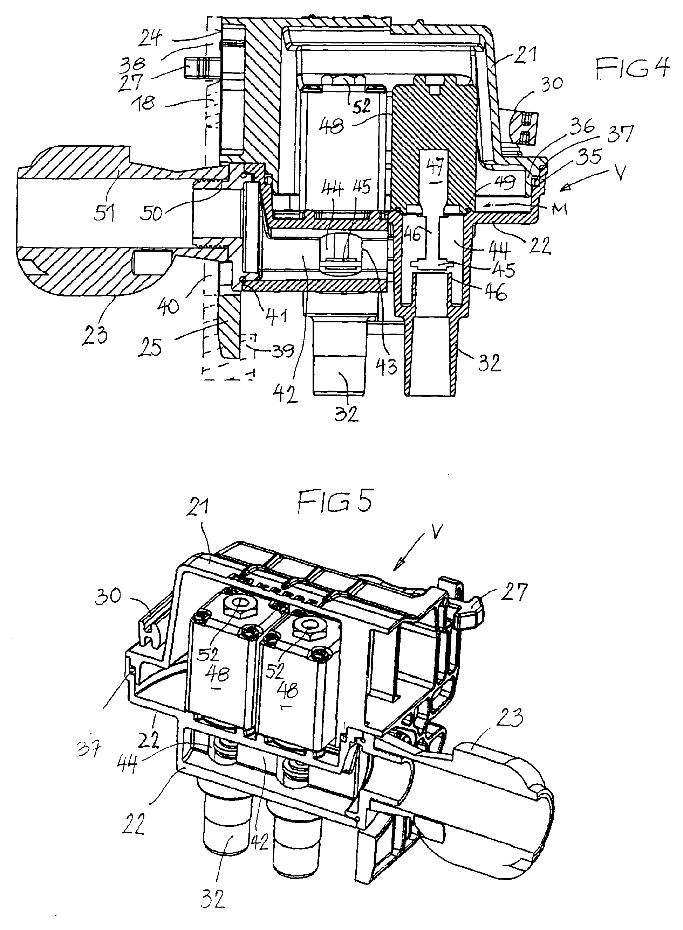

Am Gehäuseunterteil 22 sind unterseitig mehrere Druckluft-Leitungs-Anschlussstutzen 32 angeformt, an die die Druckluftleitungen 19 in Form von Druckluftschläuchen angeschlossen sind. Ferner ist an der Unterseite des Gehäuseunterteils 22 zumindest ein Stutzen oder eine Kabeldurchführung 33 mit einer Verschraubung 34 für eine elektrische Leitung, hier die Leitung 11, vorgesehen, die im Inneren des Verteilers V zu dort angeordneten Magnetspulen 48 (Aktoren) (Fig. 4) führt, wobei Adern der Leitung 11 abgedichtet an Anschlüssen 52 der Magnetspulen 48 angeschlossen sind (nicht gezeigt). Am Gehäuseoberteil 21 ist zumindest eine mechanische Aufnahme 31 in Form einer zur Montierseite 24 und seitlich offenen Tasche angeformt, die beispielsweise zum Festklemmen der elektrischen Leitung 11 dient. In der gezeigten Ausführungsform des Verteilers V sind symmetrisch beiderseits des Druckluft-Schlauchverbinders 23 zwei solche Aufnahmen 31 vorgesehen.

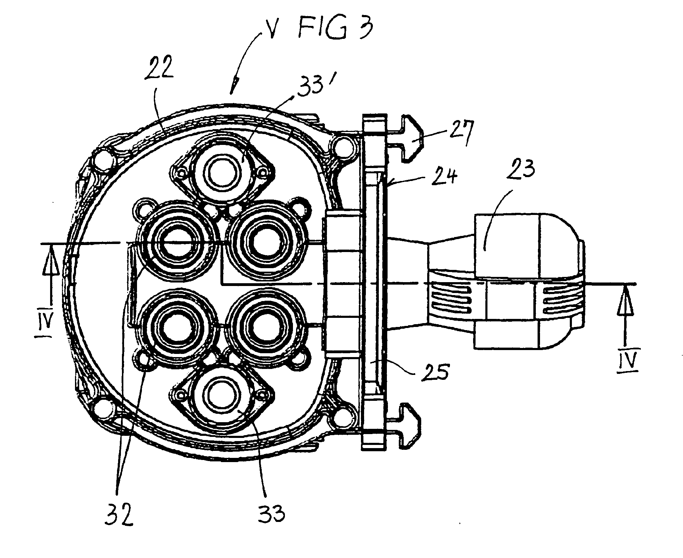

In der Unterseite des Verteilers V (Gehäuseunterteil 23) in Fig. 3 sind insgesamt vier Anschlussstutzen 32 in etwa in den Ecken eines Quadrats positioniert, und sind außerhalb dieses Quadrats der Stutzen 33 und symmetrisch ein weiterer Stutzen 33' als direkte Kabeldurchführungen für die Leitungen 11, 20 vorgesehen. Der Stutzen 33' dient beispielsweise dazu, die elektrische Leitung 20 von dem Schwimmerschalter 53 in den Verteiler V zu führen, wobei diese elektrische Leitung 20 dann z.B. in der elektrischen Leitung 11 zur Klärsteuerung C geführt ist, beispielsweise in Form einer oder mehrerer Adern der elektrischen Leitung 11. Die elektrischen Leitungen 11, 20 werden hermetisch dicht in den Schraubverbindungen 34 fixiert. Alternativ könnte anstelle der Stutzen 33, 33' jeweils ein Steckerteil abgedichtet am Gehäuseunterteil 22 montiert sein. Dort kann dann eine Leitung oder ein Kabel mit einem passenden Steckerteil angeschlossen werden. Diese trennbare Steckerverbindung sollte dicht ausgebildet sein.

In der Schnittdarstellung in Fig.4 (versetzte Schnittebene IV-IV in Fig. 3) ist der innere Aufbau des Verteilers V zu sehen, und wird die Installation des Verteilers V an dem Montierwiderlager 18 angedeutet.

Der Verteiler V in Fig. 4 enthält beispielsweise vier über die Leitung 11 steuerbare Magnetventile M, mit denen die jeweilige Druckbeaufschlagung der hier vier Druckluftleitungen 19 individuell von der Klärsteuerung C aus steuerbar ist. Jedes Magnetventil M weist eine Magnetspule 48 in einem Aktorenbereich des Gehäuseoberteils 21 auf, die über einen nur schematisch angedeuteten Anker 47 und einen Schaft 46 einen Ventilteller 45 axial relativ zu einem im Gehäuseunterteil 22, hier einstückig, integrierten Ventilsitz 46 verstellt. Jeder Ventilsitz 46 wird durch einen Schlauch-Anschlussstutzen 32 an der Unterseite des Gehäuseunterteils 22 verlängert. Der Gehäuseoberteil 21 ist mit einer Steckfassung 36 in einem Umfangsflansch 35 des Gehäuseunterteils 22 mittels des Dichtelementes 37 hermetisch dicht befestigt. Jede Magnetspule 48 ist ferner über ein Dichtelement 49, z.B. einen O-Ring, abgedichtet in einem Montierbereich des Gehäuseunterteils 22 festgelegt. Bei den Magnetspulen 48 kann es sich sozusagen um nasse Magnetspulen handeln. Das Dichtelement 37 bildet eine hermetische Abdichtung zwischen dem Aktorenbereich im Gehäuseoberteil 21 und der äußeren Umgebung. Jedes Dichtelement 49 bildet eine hermetische Abdichtung zwischen dem Aktorenbereich im Verteiler V und einem Druckluftbereich im Gehäuseunterteil 22.

Der Druckluftbereich im Gehäuseunterteil 22 weist einen seitlichen Einlass 41 zu einem im Wesentlichen horizontalen Verteilerkanal 42 auf, von dem Stichkanäle 43 zu hier vier Ventilkammern 44 führen. Im Einlass 41 ist ein Flanschteil 50 mittels eines Dichtelementes 41 hermetisch dicht montiert, das Teil des Druckluft-Schlauchverbinders 23 ist, der mit einem Gehäusekörper 51 auf dem Flanschteil 50 sitzt. In Fig. 4 wird keiner der Stutzen 33 (oder Steckerteile) für elektrische Leitungen gezeigt.

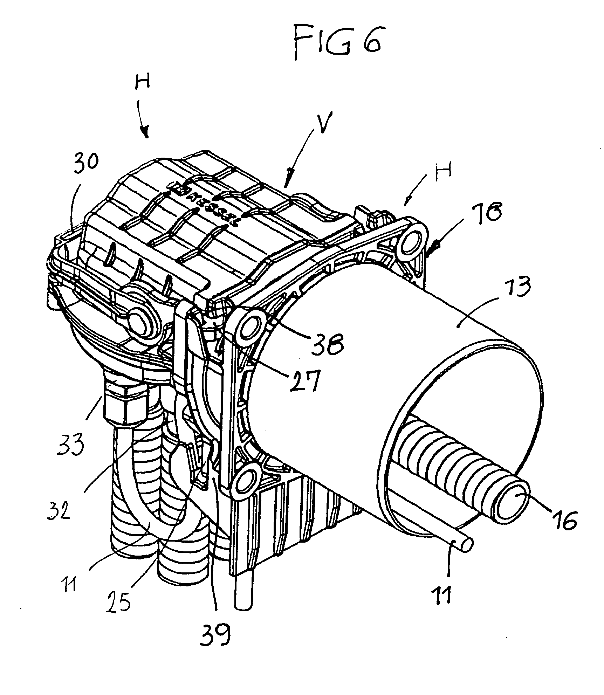

Beim Installieren des Verteilers V im Behälter 1 wird die Einsteckschürze 25 an der Montierseite 24 in eine Einstecktasche 39 des Montierwiderlagers 8 von oben eingesetzt, wobei gleichzeitig die bei hochgeschwenktem Bedienungshebel 30 weiter als in Fig. 4 gezeigt über die Montierseite 24 vorstehenden Zuganker 27 in Ausschnitte oder Durchbrüche 38 des Montierwiderlagers 18 eingefädelt werden und diese hintergreifen. Danach wird der Bedienungshebel 30 in Fig. 4 im Uhrzeigersinn in die gezeigte Position geschwenkt, bis die Zuganker 27 greifen und den Verteiler V gegen das Montierwiderlager 18 spannen. Die Einstecktasche 39 oder mehrere Einstecktaschen 39 und die Ausschnitte oder Durchbrüche 38 sind um einen Durchgang 40 herum angeordnet, durch welchen der Druckluft-Schlauchverbinder 23 ragt. Gegebenenfalls ist in diesem Durchgang 40 das in Fig. 1 angedeutete und in Fig. 6 gezeigte Leerrohr 13 festgelegt. Die Druckluftleitungen 16, 19 und die Leitungen 11, 20 sind gegebenenfalls bereits installiert.

Fig. 5 verdeutlicht in einer Teilschnittansicht, dass die Magnetspulen 48 jeweils blockförmige Außengehäuse besitzen, die auf dem Gehäuseunterteil 22 verschraubt sind. Der Verteiler V könnte mehr als vier Magnetventile M enthalten, oder weniger, je nach dem, an wie viel Stellen in der klärtechnischen Anlage A Druckluft eingespeist werden muss. Ferner sind in Fig. 5 nochmals die Anschlussstutzen 32 und der Verteilerkanal 42 sowie die Ventilkammern 44 zu sehen. Der gesamte Bereich, in dem sich Magnetspulen 48 und Anschlussstutzen 33 befinden, ist von dem Dichtelement 37 umfasst und hermetisch abgedichtet. Die Anzahl der Stutzen 32, 33, 33' wie auch deren Platzierung sind frei wählbar.

Fig. 6 zeigt den an dem Montierwiderlager 18 des Behälters installierten Verteiler V. Das Montierwiderlager 18 kann integraler Teil des Behälters 1 sein, oder in Form einer im Grundzug viereckigen Kunststoff-Platte (Kunststoff-Spritzgussteil) im Behälter 1 montiert sein. Die Steckschürze 25 ist in die Stecktaschen 39 eingesetzt. Die Zuganker 27 hintergreifen die schlitzförmigen Ausschnitte oder Durchbrüche 38 des Montierwiderlagers 18. Der Bedienungshebel 30 ist entgegen dem Uhrzeigersinn in seine Verriegelungsstellung geschwenkt, in der der Verteiler V mit seiner Montierseite gegen das Montierwiderlager 18 gespannt ist. Im Durchbruch des Montierwiderlagers 18 ist das Leerrohr 13 montiert oder eingeformt, durch das die Leitungen 11, 16 verlaufen.

Die Halterung H des Verteilers V im Behälter 1 könnte auch mit Befestigungselementen versehen sein, die Werkzeuge erfordern. Ferner könnte die elektrische Leitung von jedem Schwimmerschalter 53 oder von anderen Sensoren oder Meldern im Behälter 1 von der elektrischen Leitung 11 getrennt in einem eigenen Kabel durch den Verteiler V zur Klärsteuerung C verlaufen. Die zu Fig. 1 erwähnten Schnellverbinder 12, 17 könnten beispielsweise in dem Leerrohr 13 enthalten sein, sodass sich die gesamte Funktionsausstattung der klärtechnischen Anlage A mit Schlauch- und Leitungsverbindungen im Behälter 1 vorinstallieren oder vormontieren lässt, und dann nur noch die Leitungen 11, 16 angeschlossen werden zu brauchen, ohne ins Innere des Behälters 1 eingreifen oder einsteigen zu müssen. Wie in Fig. 1 angedeutet, können die Leitungen 19, 20 mit Überlängen verlegt sein, so dass der Verteiler V entnommen werden kann, ohne zunächst alle Leitungen im Inneren des Behälters 1 lösen zu müssen. Im gezeigten Ausführungsbeispiel führen die vier DruckluftSchläuche 19 zu den Anschlüssen 10 der drei Druckluftheber 8 und zu einem Anschluss der Belüftungsvorrichtung 9.

## Patentansprüche

1. Klärtechnische Anlage (A), insbesondere Abwasser-Kläranlage (K), mit einem Kammern (3, 4) aufweisenden Behälter (1), in welchem wenigstens eins Druckluftheber (8) angeordnet ist, einer Druckluftquelle (L) außerhalb des Behälters (1), einem an die Druckluftquelle (1) angeschlossenen Verteiler (V) mit wenigstens einem Magnetventil (M), wenigstens einer Druckluftleitung (19) vom Verteiler (V) zum jeweiligen Druckluftheber (8), und einer zumindest mit dem Verteiler (F) elektrisch verbundenen Klärsteuerung (C), **dadurch gekennzeichnet, dass** der Verteiler (V) im Inneren des Behälters (1) installiert ist.

2. Klärtechnische Anlage nach Anspruch 1, **dadurch gekennzeichnet, dass** zwischen dem Verteiler (V) und der Druckluftquelle (L) sowie der Klärsteuerung (C) jeweils eine in den Behälter (1) geführte Druckluft-Speiseleitung (16) und eine elektrische Leitung (11) vorgesehen sind.

3. Klärtechnische Anlage nach Anspruch 1, **dadurch gekennzeichnet, dass** in dem einen Zugang (14, 15) aufweisenden Behälter (1) mehrere Druckluftheber (8) angeordnet und über mehrere Druckluftleitungen (19) an den Verteiler (V) angeschlossen sind, dass der Verteiler (V) im Bereich des Zugangs (14, 15) oberhalb des BetriebsFüllstandniveaus der klärtechnischen Anlage (A) herausnehmbar installiert ist, vorzugsweise mit einer ohne Werkzeug ausschließlich manuell bedienbaren Halterung (H), und dass, vorzugsweise zumindest die jeweilige Druckluftleitung (19) vom Verteiler (V) zum Druckluftheber (8) im Behälter (1) untergebracht ist.

4. Klärtechnische Anlage nach Anspruch 3, **dadurch gekennzeichnet, dass** die Halterung (H) einen Einhand-Bedienungshebel (30) zum Festlegen und, vorzugsweise, auch zum Ausheben und Einsetzen, des Verteilers (V) umfasst.

5. Klärtechnische Anlage nach wenigstens einem der vorhergehenden Ansprüche, **dadurch gekennzeichnet, dass** wenigstens ein elektrisch an die Klärsteuerung (C) angeschlossener Füllstands- oder Schwimmerschalter-Sensor (53) im Behälter (1) installiert ist, dessen elektrische Leitung (20) in und durch den Verteiler (V) zur Klärsteuerung (C) geführt ist, vorzugsweise in dem Verteiler (V) in die Leitung (11) integriert ist.

6. Klärtechnische Anlage nach wenigstens einem der vorhergehenden Ansprüche, **dadurch gekennzeichnet, dass** der Verteiler (V) außenseitig wenigstens eine mechanische Aufnahme (31) zur Montage eines elektrischen Kabels einer Klärsteuerungs- oder -überwachungskomponente aufweist, vorzugsweise eines Füllstands- oder Schwimmerschalter-Sensors (53), dessen elektrische Leitung (20) direkt oder über eine Steckerverbindung über den Verteiler (V) zur Klärsteuerung (C) geführt ist.

7. Klärtechnische Anlage nach Anspruch 1, **dadurch gekennzeichnet, dass** der Verteiler (V) ein Außengehäuse aus Kunststoff-Spritzgussteilen aufweist, und dass im Außengehäuse jeweils hermetische Abdichtungen (49, 37) zwischen einem Druckluftbereich und einem Aktorenbereich und dem Aktorenbereich und der Außenseite vorgesehen sind.

8. Klärtechnische Anlage nach Anspruch 7, **dadurch gekennzeichnet, dass** der Druckluftbereich in einem Gehäuseunterteil (22) angeordnet ist, der einen, vorzugsweise seitlichen, Drucklufteinlass (41), einen Verteilerkanal (42), Stichkanäle (43) jeweils vom Verteilerkanal (42) zu Ventilsitzkammern (44), integrierte Ventilsitze (46) und in Verlängerung der Ventilsitze (46) Anschlussstutzen (32) für die Druckluftleitungen (19), vorzugweise für Druckluftschläuche, aufweist.

9. Klärtechnische Anlage nach Anspruch 8, **dadurch gekennzeichnet, dass** im Gehäuseunterteil (22) zumindest eine, vorzugsweise zwei, abgedichtete Kabeldurchführungen (33), gegebenenfalls jeweils mit einer Schraubverbindung (34), oder einem Verbindungssteckerteil vorgesehen ist.

10. Klärtechnische Anlage nach Anspruch 8, **dadurch gekennzeichnet, dass** im Drucklufteinlass (41) ein Flanschteil (50) eines Druckluft-Schlauchverbinders (23) angeordnet, vorzugsweise abgedichtet verschraubt, ist.

11. Klärtechnische Anlage nach Anspruch 7, **dadurch gekennzeichnet, dass** der Aktorenbereich in einem Gehäuseoberteil (21) angeordnet ist, der unter Zwischenlage eines Dichtungselements (37) mit einem Umfangsflansch (35) des Gehäuseunterteils (22) verbunden, vorzugweise verschraubt, ist, und dass an dem Gehäuseoberteil (21) eine im Wesentlichen ebene Montierseite (24) des Verteilers (V) geformt ist.

12. Klärtechnische Anlage nach wenigstens einem der vorhergehenden Ansprüche, **dadurch gekennzeichnet, dass** jeweils am Gehäuseoberteil (21) an der Montierseite (24) eine unten liegende Steckschürze (25) angeformt und außen der U-förmig ausgebildete Einhand-Bedienungshebel (3) in Schwenklagerungen (22) schwenkbar gelagert und über Exzenter (28) mit Zugankern (27) gekoppelt ist, die oberhalb der Steckschürze (25) über die Montierfläche (24) vorstehen.

13. Klärtechnische Anlage nach Anspruch 12, **dadurch gekennzeichnet, dass** im Behälter (1) für den Verteiler (V) ein Montierwiderlager (18) vorgesehen ist, das eine um einen Durchbruch (40) und/oder ein aus dem Behälter (1) nach außen ragendes Leerrohr (13) zumindest für den Druckluft-Schlauchverbinder (23) angeordnete Stecktasche (39) für die Steckschürze (25) und Eingriffsöffnungen (38) für die Zuganker (27) aufweist.

14. Klärtechnische Anlage nach Anspruch 6, **dadurch gekennzeichnet, dass** die Aufnahme (31) eine an die Montierfläche (24) angrenzende, oberhalb der Steckschürze (25) und unterhalb der Zuganker (27) positionierte, seitlich offene Tasche im Gehäuseoberteil (21) ist, vorzugsweise zum lösbaren Einklemmen wenigstens einer elektrischen Leitung (11, 20).

15. Klärtechnische Anlage nach wenigstens einem der vorhergehenden Ansprüche, **dadurch gekennzeichnet, dass** im Behälter (1) ein an den Verteiler (V) angeschlossener Steuerleitungs- und ein Druckluft-Speiseleitungsabschnitt installiert sind, die, z.B. außerhalb des Behälters (1), Schnellverbinder oder Steckkupplungen (12, 17) aufweisen, an denen die Steuerleitung (11) und die Druckluft-Speiseleitung (16) anschließbar sind.
